Europäisches Patentamt

European Patent Office

Office européen des brevets

(19)

(11) Numéro de publication : **0 325 538 B1**

## (12) FASCICULE DE BREVET EUROPEEN

(45) Date de publication du fascicule du brevet :
**16.09.92 Bulletin 92/38**

(21) Numéro de dépôt : **89400159.3**

(22) Date de dépôt : **19.01.89**

(51) Int. Cl.$^5$ : **C09J 127/06,** C08J 3/11,
C08L 27/06

(54) **Composition adhésive à base de copolymère de chlorure de vinyle et procédé de collage la mettant en oeuvre.**

(30) Priorité : **21.01.88 FR 8800643**

(43) Date de publication de la demande :
**26.07.89 Bulletin 89/30**

(45) Mention de la délivrance du brevet :
**16.09.92 Bulletin 92/38**

(84) Etats contractants désignés :
**AT BE CH DE ES GB GR IT LI LU NL SE**

(56) Documents cités :
**GB-A- 926 901**

(56) Documents cités :
**PATENT ABSTRACTS OF JAPAN, vol. 4, no. 26
(C-1)[508], 6 mars 1980, page 56 C 1; & JP-A-55
00 767 (SEKISUI KAGAKU KOGYOK.K.) 07-
01-1980
CHEMICAL ABSTRACTS, vol. 90, no. 24, 11 juin
1979, page 109, résumé no. 188850n, Columbus, Ohio, US; & JP-A-79 21 474(DAICEL LTD)
17-02-1979**

(73) Titulaire : **ONFROY S.A.**
**35, rue Lucien Sampaix**
**F-75010 Paris (FR)**

(72) Inventeur : **Van Wittenberge-Guillez, Julien
Georges**
**72, avenue Marceau**
**F-75008 Paris (FR)**

(74) Mandataire : **Dubost, Thierry Pierre**
**Cray Valley SA, BP 22**
**F-60550 Verneuil en Halatte (FR)**

EP 0 325 538 B1

Jouve, 18, rue Saint-Denis, 75001 PARIS

## Description

La présente invention se rapporte aux compositions adhésives comprenant un polymère à motifs chlorure de vinyle dissous dans un système solvant organique comprenant un solvant non cyclique et un cosolvant cyclique. Elle vise tout particulièrement un procédé de collage de pièces en poly(chlorure de vinyle) non plastifiées, telles que des canalisations d'eaux pluviales, d'eaux usées et d'eau froide sous pression.

Une composition adhésive qui convient à ces applications doit donner une bonne adhérence, être stable au stockage, ce qui implique une bonne solubilité dans le solvant mis en oeuvre, avoir des propriétés rhéologiques convenables, c'est-à-dire être ni trop fluide, ni trop visqueuse, permettant de l'appliquer sans coulure et ne pas dégager de vapeur toxique.

On n'a pu obtenir jusqu'ici une adhérence suffisante qu'en utilisant, comme solvant, du tétrahydrofuranne et diméthylformamide qui dégagent des vapeurs toxiques. Sans ces solvants qui attaquent la surface des pièces à coller, l'adhérence est insuffisante.

L'invention pallie ces inconvénients par une composition adhésive qui colle mieux le poly(chlorure de vinyle) que les compositions antérieures, qui collent également d'autres matériaux que le poly(chlorure de vinyle), qui est stable au stockage sans gélification sous l'action du froid, qui a des propriétés rhéologiques meilleures que les compositions antérieures, et notamment une viscosité stable dans une grande plage de température, dont la durée de mise en oeuvre permet de faciliter l'application, qui a une grande vitesse de prise, et qui pourtant peut ne pas contenir les substances toxiques réputées indispensables jusqu'ici. La stabilité au stockage permet de formuler des colles ayant un extrait sec plus grand, ce qui donne de meilleurs résultats pour des assemblages ayant un jeu diamétral important.

Suivant l'invention, le polymère est un copolymère de chlorure de vinyle et d'un acrylate d'alcoyle inférieur ou d'un méthacrylate d'alcoyle inférieur.

On a constaté, d'une manière imprévisible, que cette composition adhésive donne une adhérence remarquable pour coller des pièces en poly(chlorure de vinyle), en poly(chlorure de vinyle) surchloré, en copolymères de chlorure de vinyle et d'acrylates ou de méthacrylates, en copolymères de chlorure de vinyle et d'éthylène, en méthacrylate de méthyle, en copolymères de styrène, de butadiène et d'acrylonitrile, et en polycarbonates à elles-mêmes et entre elles et également pour les coller à des métaux, tels que l'acier, le cuivre et l'aluminium.

On a obtenu des résultats satisfaisants avec des copolymères dont l'un des monomères est l'acrylate de méthyle, l'acrylate d'éthyle, l'acrylate de butyle, l'acrylate d'isobutyle, l'acrylate d'éthyl-2 hexyle ou l'un des méthacrylates correspondants. De préférence, le copolymère a une valeur K comprise entre 70 et 50, telle que définie à la page 517 du 14ème volume de Encyclopedia of Polymer Science and Technology (1971).

Habituellement, le copolymère en représente, en poids, de 10 à 30 % et le système solvant de 90 à 70 %, et le polymère a une valeur K de 65 à 55 environ.

Le plus imprévisible est que cette adhérence remarquable est obtenue même si le système solvant ne contient pas de diméthylformamide ni de tétrahydrofuranne. De préférence, le solvant est une monocétone aliphatique inférieure ou un acétate d'alcoyle inférieur. Par inférieur, on entend, dans le présent mémoire, un radical ayant notamment de 1 à 4 atomes de carbone et de préférence 1 ou 2 atomes de carbone. Les cétones répondent à la formule

$$R^1 - CO - R^2$$

$R^1$ et $R^2$ étant alcoyle inférieur, identique ou différent, et l'un d'entre eux pouvant être de l'hydrogène.

Habituellement, le solvant représente en poids de 1 à 99 % et mieux de 66 à 99 % du système solvant.

Comme cosolvant lourd, on préfère utiliser du toluène et/ou de la cyclohexanone, qui règlent la viscosité, ralentissent la vitesse d'évaporation du solvant en augmentant ainsi le temps dont on dispose pour l'application de la composition (temps de travail) et empêchant la formation d'humidité par condensation lors de l'évaporation du solvant, ce qui se traduirait par une prise trop lente de la colle.

Le choix de la résine et du système solvant, de paire avec l'incorporation de stabilisants, tels que des résines époxydiques, de l'huile de soja époxydée, des composés organométalliques de type carboxylate d'étainalcoyle, tel que laurate d'étainbutyle, carboxylate métallique, tel que laurate de baryum, laurate de cadmium, laurate de baryum et de cadmium, laurate de plomb, en des proportions représentant de 0,1 à 1 % du poids de la composition, donnent à celle-ci la stabilité requise au stockage et un bon vieillissement du film sec.

On peut régler la rhéologie par l'adjonction d'un agent épaississant.

De préférence, la composition comprend de 0,1 à 1,5 % en poids d'un agent stabilisant. On prépare les compositions suivant l'invention en dissolvant le copolymère dans le système solvant à la température ambiante.

L'invention vise tout particulièrement un procédé de collage d'une pièce en poly(chlorure de vinyle) à une autre pièce, caractérisé en ce qu'il consiste à appliquer, sur chaque surface en regard des deux pièces, de 200 à 500 g d'une composition suivant l'invention par m² de surface.

On donne ci-dessous des exemples de compositions suivant l'invention, les pourcentages étant exprimés en poids.

Example 1

```
Résine copolymère chlorure de vinyle-acrylate d'éthyle   22,00 %
Silice pyrogénée (surface BET 200 m³/g)                   3,00 %
Méthyléthylcétone                                        59,60 %
Toluène                                                  11,00 %
Cyclohexanone                                             4,00 %
Di laurate d'étainbutyle                                  0,20 %
Huile de soja époxydée                                    0,20 %
```

Example 2

```
Résine copolymère chlorure de vinyle-acrylate de méthyle  22,00 %
Silice pyrogénée (surface BET 200 m²/g)                    3,00 %
Méthyléthylcétone                                         70,60 %
N-méthyl pyrrolidone                                       5,00 %
Di laurate d'étainbutyle                                   0,20 %
Huile de soja époxydée                                     0,20 %
```

Example 3

```
Résine copolymère chlorure de vinyle-acrylate de butyle   20,00 %
Huile de ricin hydrogénée                                  2,00 %
Silice précipitée                                          1,00 %
Méthyléthylcétone                                         69,00 %
Cyclohexanone                                              7,60 %
```

```
Di laurate d'étainbutyle                                   0,20 %
Huile de soja époxydée                                     0,20 %
```

On donne ci-dessous les résistances en cisaillement de la composition de l'exemple 1 après 48 heures de séchage :

| | |
|---|---|
| PVC surchloré/PVC surchloré | 176 daN/cm² |
| Méthacrylate de méthyle/méthacrylate de méthyle | 62 daN/cm² |
| PVC/cuivre | 32 daN/cm² |
| PVC/acier | 50 daN/cm² |
| PVC/aluminium | 32 daN/cm² |

Exemple 4 (art antérieur)

Il s'agit d'une colle du commerce ayant la composition suivante :

| | |
|---|---|
| Polychlorure de vinyle | 17,00 % |
| Silice | 2,00 % |
| Tétrahydrofuranne | 50,00 % |
| Cyclohexanone | 10,00 % |
| Diméthylformamide | 6,00 % |
| Méthyléthylcétone | 15,00 % |

Exemple 5 (art antérieur)

Il s'agit d'une colle du commerce ayant la composition suivante :

| | |
|---|---|
| Polychlorure de vinyle | 24,00 % |
| Silice | 2,00 % |
| Tétrahydrofuranne | 50,00 % |
| Cyclohexanone | 10,00 % |
| Diméthylformamide | 5,00 % |
| Méthyléthylcétone | 6,00 % |

Au tableau ci-dessous, on donne les résultats comparatifs obtenus :

EP 0 325 538 B1

TABLEAU

|  | Ex. n° 1 | Ex. n° 2 | Ex. n° 3 | Ex. n° 4 | Ex. n°5 |
|---|---|---|---|---|---|
| EXTRAIT SEC | 25 % | 25 % | 23 % | 19 % | 26 % |
| Viscosité BROOKFIELD Broche 6 V. 100<br>à 22° C<br>15 j à -22° C<br>+ 24 h + 4° C | 7500 mPa.s<br>9900<br>8500 | 7000 mPa.s<br>9200<br>7800 | 15000 mPa.s<br>22000<br>18000 | 1800 mPa.s<br>Gel<br>non mesurable | 6100 mPa.s<br>Gel<br>non mesurable |
| Résistance au cisaillement DaN/cm²<br>5 mn<br>10 mn<br>20 mn<br>1 h<br>2 h<br>6 h | 4,4<br>9,4<br>15<br>24,6<br>27<br>35 | 3,8<br>8,9<br>14,7<br>23,8<br>26,2<br>34,8 | 4,2<br>9,3<br>15,2<br>25,2<br>28,3<br>36,3 | 3,8<br>6,5<br>8,3<br>16,2<br>19,2<br>22 | 4,2<br>7,2<br>8,4<br>16,6<br>20<br>23,3 |
| ETIQUETAGE LEGAL | facilement inflammable | facilement inflammable | facilement inflammable | facilement inflammable NOCIF | inflammable NOCIF |

L'essai de résistance au cisaillement s'effectue conformément au protocole opératoire décrit à la page 17 au paragraphe "Essai de durcissement" du Document Technique unifié n° 60.32 de Décembre 1965 intitulé : "Travaux de canalisation en chlorure de polyvinyle non plastifié, descentes d'eaux pluviales", que l'on peut se procurer auprès du Centre Scientifique et Technique du Bâtiment, 4 avenue du Recteur Poincaré Paris. Cet essai détermine la contrainte de rupture d'un collage soumis à un effort de cisaillement.

Les compositions suivant l'invention conservent sensiblement leur viscosité sous l'action du froid. Leur résistance au cisaillement est meilleure que celles des formulations antérieures.

## Revendications

1. Composition adhésive destinée au collage de pièces en poly (chlorure de vinyle), en poly (chlorure de vinyle) surchloré, en copolymères de chlorure de vinyle et d'acrylates ou de méthacrylates, en copolymères de chlorure de vinyle et d'éthylène, en méthacrylate de méthyle, en copolymères de styrène, de butadiène et d'acrylonitrile, en polycarbonates et en métaux, comprenant un polymère à motifs chlorure de vinyl, dissous dans un système solvant organique comprenant un solvant non cyclique et un solvant cyclique, caractérisée en ce que le polymère est un copolymère de chlorure de vinyle et d'un acrylate d'alcoyle inférieur ou d'un méthacrylte d'alcoyle inférieur.

2. Composition suivant la revendication 1, caractérisée en ce que le polymère a une valeur K de 70 à 50.

3. Composition suivant la revendication 1 ou 2, caractérisée en ce que le copolymère en représente en poids, de 10 à 30% et le système solvant de 90 à 70%.

4. Composition suivant la revendication 1 à 3, caractérisée en ce que le solvant est une monocétone aliphatique inférieure ou un acétate d'alcoyle inférieur.

5. Composition suivant la revendication 1 à 4, caractérisée en ce que le cosolvant comprend du toluène et/ou de la cyclohexanone.

6. Composition suivant la revendication 1 à 5, caractérisée en ce que le cosolvant est sensiblement exempt de tétrahydrofuranne et le solvant est sensiblement exempt de diméthylformamide.

7. Composition suivant l'une des revendications 1 à 6, caractérisée en ce que le solvant représente en poids de 1 à 99 % et mieux de 66 à 99 % du système solvant.

8. Composition suivant l'une des revendications 1 à 7, caractérisée en ce qu'elle comprend de 1 à 10 % en poids de silice pyrogénée ayant une surface BET d'au moins 100 m³/g.

9. Composition suivant l'une des revendications 1 à 8, caractérisé en ce qu'elle comprend de 0,1 à 1,5 % en poids d'un agent stabilisant.

10. Procédé de collage d'une pièce en poly (chlorure de vinyle) à une autre pièce, caractérisé en ce qu'il consiste à appliquer, sur chaque surface en regard des deux pièces, de 200 à 500 g d'une composition suivant les revendicatiuons 1 à 9 par m² de surface.

## Patentansprüche

1. Klebstoffzusammensetzung für das Verkleben von Teilen aus Polyvinylchlorid, aus nachchloriertem Polyvinylchlorid, aus Copolymeren von Vinylchlorid und Acrylaten oder Methacrylaten, aus Copolymeren von Vinylchlorid und Ethylen, aus Methylmethacrylat, aus Copolymeren von Styrol, Butadien und Acrylnitril, aus Polycarbonaten und aus Metallen, enthaltend ein Polymer mit Vinylchlorideinheiten, das in einem organischen Lösungsmittelsystem gelöst ist, das ein nicht zyklisches Lösungsmittel und ein zyklisches Lösungsmittel enthält, dadurch gekennzeichnet, daß das Polymer ein Copolymer von Vinylchlorid und einem Niederalkylacrylat oder einem Niederalkylmethacrylat ist.

2. Zusammensetzung nach Anspruch 1, dadurch gekennzeichnet, daß das Copolymer einen K-Wert von 70 bis 50 besitzt.

3. Zusammensetzung nach Anspruch 1 oder 2, dadurch gekennzeichnet, daß das Copolymer 10 bis 30 Gew.-% repräsentiert und das Lösungsmittelsystem 90 bis 70 Gew.-%.

4. Zusammensetzung nach einem der Ansprüche 1 bis 3, dadurch gekennzeichnet, daß das Lösungsmittel ein niedriges aliphatisches Monoketon oder ein Niederalkylacetat ist.

5. Zusammensetzung nach einem der Ansprüche 1 bis 4, dadurch gekennzeichnet, daß das Cosolvens Toluol und/oder Cyclohexanon enthält.

6. Zusammensetzung nach einem der Ansprüche 1 bis 5, dadurch gekennzeichnet, daß das Cosolvens im wesentlichen frei von Tetrahydrofuran und das Lösungsmittel im wesentlichen frei von Dimethylformamid ist.

7. Zusammensetzung nach einem der Ansprüche 1 bis 6, dadurch gekennzeichnet, daß das Lösungsmittel 1 bis 99 Gew.-%, und besser 66 bis 99 Gew.-%, des Lösungsmittelsystems repräsentiert.

8. Zusammensetzung nach einem der Ansprüche 1 bis 7, dadurch gekennzeichnet, daß es 1 bis 10 Gew.-% pyrogene Kieselsäure mit einer BET-Oberfläche von mindestens 100 $m^3/g$ enthält.

9. Zusammensetzung nach einem der Ansprüche 1 bis 8, dadurch gekennzeichnet, daß es 0,1 bis 1,5 Gew.-% eines Stabilisierungsmittels enthält.

10. Verfahren zum Verkleben eines Teils aus Polyvinylchlorid mit einem anderen Teil, dadurch gekennzeichnet, daß es darin besteht, auf jede der einander gegenüberliegenden Flächen der beiden Teile 200 bis 500 g einer Zusammensetzung nach den Ansprüchen 1 bis 9 pro $m^2$ Oberfläche aufzubringen.

## Claims

1. Adhesive composition intended for adhesive bonding of parts made of poly(vinyl chloride), made of chlorinated poly(vinyl chloride), made of copolymers of vinyl chloride and acrylates or methacrylates, made of copolymers of vinyl chloride and ethylene, made of methyl methacrylate, made of copolymers of styrene, butadiene and acrylonitrile, made of polycarbonates and made of metals, comprising a polymer containing vinyl chloride units, dissolved in an organic solvent system comprising a noncyclic solvent and a cyclic solvent, characterised in that the polymer is a copolymer of vinyl chloride and of a lower alkyl acrylate or lower alkyl methacrylate.

2. Composition according to Claim 1, characterised in that the polymer has a K value of 70 to 50.

3. Composition according to Claim 1 or 2, characterised in that the copolymer represents from 10 to 30% by weight and the solvent system from 90 to 70% by weight of the composition.

4. Composition according to one of Claims 1 to 3, characterised in that the solvent is a lower aliphatic monoketone or a lower alkyl acetate.

5. Composition according to one of Claims 1 to 4, characterised in that the cosolvent comprises toluene and/or cyclohexanone.

6. Composition according to one of Claims 1 to 5, characterised in that the cosolvent is essentially free from tetrahydrofuran and the solvent is essentially free from dimethylformamide.

7. Composition according to one of Claims 1 to 6, characterised in that the solvent represents from 1 to 99% by weight and preferably from 66 to 99% by weight of the solvent system.

8. Composition according to one of Claims 1 to 7, characterised in that it comprises from 1 to 10% by weight of pyrogenic silica having a BET surface area of at least 100 $m^2/g$.

9. Composition according to one of Claims 1 to 8, characterised in that it comprises from 0.1 to 1.5% by weight of a stabiliser.

10. Method for adhesive bonding of a part made of poly(vinyl chloride) to another part, characterised in that it consists in applying to each of the surfaces of the two parts which are facing one another from 200 to 500 g of a composition according to Claims 1 to 9 per m² of surface area.